# EUROPÄISCHE PATENTSCHRIFT

(11) **EP 2 132 475 B1**
(45) Veröffentlichungstag und Bekanntmachung des Hinweises auf die Patenterteilung: **31.10.2012**
(21) Anmeldenummer: 08707077.7
(22) Anmeldetag: 17.01.2008
(51) Int. Cl.: F16P 3/10, E05B 63/12, E05B 15/10, E05B 17/22, E05B 47/00

(54) **VORRICHTUNG ZUM LÖSBAREN ZUHALTEN EINES VERRIEGELTEN GESCHLOSSENEN ZUSTANDES EINER RAUMTRENNEINRICHTUNG**
DEVICE FOR MAINTAINING A LOCKED AND CLOSED STATE OF A SPACE-SEPARATING DEVICE IN A RELEASABLE MANNER
DISPOSITIF POUR LE MAINTIEN LIBÉRABLE D'UN ÉTAT FERMÉ DE MANIÈRE VERROUILLÉE D'UN DISPOSITIF DE SÉPARATION DE COMPARTIMENT

(30) Priorität: 15.03.2007 DE 102007013480
(43) Veröffentlichungstag der Anmeldung: 16.12.2009
(73) Patentinhaber: EUCHNER GmbH + Co. KG, 70771 Leinfelden-Echterdingen (DE)
(72) Erfinder: BRETSCHNEIDER, Kai, 90489 Nürnberg (DE); BÄCHLE, Erik, 70794 Filderstadt (DE)
(74) Vertreter: Crazzolara, Helmut
(86) Internationale Anmeldenummer: PCT/EP2008/000311
(87) Internationale Veröffentlichungsnummer: WO 2008/110226

(56) Entgegenhaltungen:
- EP-A- 1 795 676
- FR-A- 658 131
- GB-A- 2 188 975
- GB-A- 191 227 873
- US-A- 4 087 121
- US-A- 5 029 912
- US-B1- 6 539 760

## Beschreibung

Die vorliegende Erfindung betrifft eine Vorrichtung zum lösbaren Zuhalten eines verriegelten geschlossenen Zustandes einer Raumtrenneinrichtung, insbesondere einer Schutzeinrichtung einer Maschine.

Unter anderem aus Sicherheitsgründen werden beispielsweise in der Fertigungstechnik Maschinen und Anlagen innerhalb eines von der Umgebung abgetrennten Raumes aufgestellt, in dem sich während des Betriebs der Maschine keine Person aufhalten darf. Um dennoch beispielsweise für Wartungsarbeiten einen Zugang zu der Maschine zu haben, weist die Raumtrenneinrichtung in der Regel eine verschließbare Öffnung auf. Der Betrieb der Maschine soll dagegen in der Regel nur möglich sein, wenn die Öffnung geschlossen ist und der geschlossene Zustand verriegelt ist. Ein Zugang zu der Maschine ist nur möglich, wenn die Verriegelung des geschlossenen Zustandes aufgehoben ist.

Aus der DE 203 15 959 U1 ist eine Vorrichtung zum Überwachen des Zustandes einer solchen Raumtrenneinrichtung bekannt, bei der sichergestellt ist, dass eine sich innerhalb des abgetrennten Raumes befindliche Person nicht in der Lage ist, die Raumtrenneinrichtung zu verschließen und von innen zu verriegeln, weil andernfalls die Gefahr bestünde, dass versehentlich oder beabsichtigt die Maschine in Gang gesetzt wird, während sich eine Person innerhalb der Raumtrenneinrichtung befindet.

Aus der DE 196 32 962 A1 ist eine Türbetätigungseinrichtung bekannt, mittels der von der Innenseite einer Raumtrenneinrichtung ein den geschlossenen Zustand verriegelnder Riegel zwar in seine entriegelnde Position überführbar ist und dadurch die Raumtrenneinrichtung geöffnet werden kann, umgekehrt der Riegel aber nicht in seine verriegelnde Position überführt werden kann, sondern dieses nur von der Außenseite möglich ist. Damit ist eine Art "Fluchtentriegelung" realisiert.

Aus der nachveröffentlichten DE 10 2005 057 108 A1 europäishe veröffentlichte Patentanmeldung EP 1795 676 A2 ist ein Sicherheitsschalter zum Erzeugen eines Freigabesignals in Abhängigkeit von der Position einer beweglichen Schutztür bekannt. Das an der Schutztür zu befestigende Teil weist einen Betätiger auf, der zwischen einer ersten und einer zweiten Position verstellbar ist. Das an dem Rahmen anzubringende Teil besitzt eine Ausnehmung, in die der Betätiger in der zweiten Position eingreifen kann. Ferner ist ein Sperrglied vorgesehen, um den Betätiger in der zweiten Position zu blockieren.

Aus der DE 298 24 200 U1 ist eine Vorrichtung bekannt, die es einer Person, die unabsichtlich innerhalb einer Schutzumzäunung eingeschlossen ist, ermöglicht, diese Schutzumzäunung verlassen zu können. Gleichzeitig können die Maschinen, die innerhalb der Schutzumzäunung angeordnet sind, nur betrieben werden, wenn die Tür, an welcher die Vorrichtung angeordnet ist, nicht nur geschlossen, sondern verriegelt ist.

Aus der GB 2 188 975 A ist eine Vorrichtung zum lösbaren Zuhalten eines verriegelten geschlossenen Zustandes eines Kontrollraumes bekannt mit einen Riegel, mittels dem der geschlossene Zustand des Kontrollraumes verriegelbar ist, einem Zuhalteelement, mittels dem der Riegel in seiner verriegelnden Position arretierbar ist, und mit einem Löseelement, mittels dem die Arretierung des Riegels aufhebbar ist ,wobei die Arretierung des Riegels durch eine Drehbewegung des Löseelements relativ zu dem Riegel aufhebbar ist und das Löseelement mittels eines drehfest mit einem Drehgriff verbundenen Hebels betätigbar ist.

Aus der US 4,087,121 A ist eine Riegelschlossvorrichtung für eine Tür bekannt, wobei der Riegel mittels zwei drehbaren Zuhalteelementen in seiner verriegelnden Position arretierbar ist, wobei die Zuhalteelemente mittels eines an dem Riegel verschiebbar gelagerten Löseelements aktivierbar sind.

Der vorliegenden Erfindung liegt die Aufgabe zugrunde, eine alternative gattungsgemäße Vorrichtung bereitzustellen, welche die Nachteile des Standes der Technik überwindet. Die Vorrichtung soll nicht nur eine Verriegelung des geschlossenen Zustandes der Raumtrenneinrichtung ermöglichen, sondern darüber hinaus eine Zuhaltung des verriegelten geschlossenen Zustandes, beispielsweise solange die innerhalb der Raumtrenneinrichtung angeordnete Maschine sich in einem für Personen gefährlichen Betriebszustand befindet, etwa beim Auslaufen der Maschine nach einem Abschalten. Weiterhin soll trotz einer Zuhaltung des verriegelten geschlossenen Zustandes die Möglichkeit bestehen, dass von innerhalb der Raumtrenneinrichtung die Arretierung des Riegels aufhebbar ist. Die Vorrichtung soll dabei einen dauerhaft zuverlässigen und sicheren Betrieb gewährleisten.

Das Problem ist durch die im Anspruch 1 bestimmte Vorrichtung gelöst.

Besondere Ausführungsarten sind in den Unteransprüchen bestimmt.

Bei der Raumtrenneinrichtung kann es sich insbesondere um Schutzhauben, Schutztüren oder auch eine Anordnung von Trennwänden oder Trenngittern handeln, durch die ein innerer Bereich um eine Maschine, beispielsweise eine Werkzeugmaschine oder ein Industrieroboter, gegenüber einem äußeren Bereich abgetrennt ist, in dem sich auch während des Betriebes der Maschine Personen aufhalten können. Das erste Teil der Raumtrenneinrichtung kann beispielsweise als Rahmenteil ausgebildet sein, demgegenüber ein zweites Teil, wie beispielsweise eine Tür oder ein Fenster, bewegbar ist. Im Falle einer Tür ist üblicherweise das zweite Teil an dem ersten Teil drehbar angelenkt oder an diesem verschiebbar geführt.

Die Vorrichtung weist einen Riegel auf, mittels dem der geschlossene Zustand der Raumtrenneinrichtung verriegelbar ist. In einer Ausführungsart ist der Riegel in der Vorrichtung verschiebbar gelagert und kann beispielsweise mittels eines Betätigungselements, beispielsweise einem drehbaren Griff, aus einer zurückgezogenen Position in eine verriegelnde Position überführt werden und dadurch in sperrenden Eingriff mit einer Riegelaufnahme kommen und den geschlossenen Zustand verriegeln. Mittels eines Zuhalteelements ist der Riegel in seiner verriegelnden Position arretierbar und dadurch ist der verriegelte geschlossene Zustand der Schutzeinrichtung arretierbar bzw. zuhaltbar.

Durch einen oder mehrere Sensoren kann der geschlossene Zustand der Schutzeinrichtung, die Verriegelung des geschlossenen Zustandes und/oder die Zuhaltung des verriegelten geschlossenen Zustandes detektiert und an eine die Maschine steuernde Einrichtung signalisiert werden. Durch diese Steuerung kann beispielsweise festgelegt sein, dass die Maschine nur dann in Betrieb genommen werden kann, wenn die Raumtrenneinrichtung geschlossen ist, der geschlossene Zustand verriegelt ist und/oder der verriegelte geschlossene Zustand arretiert ist. Die Arretierung und/oder das Aufheben der Arretierung können dabei ebenfalls signalgesteuert erfolgen, beispielsweise kann die Steuerung vorsehen, dass die Arretierung des Riegels erst dann aufgehoben wird, wenn die Maschine sich in einem sicheren Zustand befindet, beispielsweise eine Werkzeugmaschine oder ein Industrieroboter still steht, sodass keine Gefährdung von Personen davon ausgehen kann. Zu diesem Zweck kann das Arretieren und/oder das Lösen gesteuert antreibbar sein.

In einer Ausführungsart ist das Zuhalteelement federkraftbelastet und kann beispielsweise in den Riegel einrasten und diesen arretieren, sobald der Riegel und das Zuhalteelement in ausreichender Weise einander angenähert sind. Die Arretierung kann durch einen steuerbaren Antrieb auch aufgehoben werden, beispielsweise mittels eines Elektromagneten oder eines piezoelektrischen Antriebs. Alternativ hierzu kann das Zuhalteelement auch federkraftbelastet in einer nicht arretierenden Stellung gehalten sein und durch einen Antrieb in die den Riegel in seiner verriegelnden Position arretierenden Zustand überführt werden. In einer weiteren alternativen Ausführungsart kann das Zuhalteelement auch zwei stabile Zustände aufweisen, zwischen denen mittels eines Antriebs hin- und hergeschaltet wird.

Die Vorrichtung weist zudem ein Löseelement auf, mittels dem die Arretierung des Riegels aufhebbar ist. Dieses Löseelement soll insbesondere von der Innenseite der Raumtrenneinrichtung betätigbar sein, gegebenenfalls auch gegen die Wirkung einer auf das Zuhalteelement wirkenden Antriebs- oder Federkraft. Dadurch ist sichergestellt, dass eine innerhalb der Raumtrenneinrichtung befindliche Person ohne Weiteres, insbesondere ohne Betätigung eines NOT-AUS Tasters, in der Lage ist, die Zuhaltung des verriegelten geschlossenen Zustandes aufzuheben. Gegebenenfalls kann bereits durch die Aufhebung der Arretierung des Riegels von der Vorrichtung ein Signal erzeugt werden, welches der Maschinensteuerung signalisiert, dass die Maschine in einen sicheren Betriebszustand zu überführen ist, beispielsweise abzuschalten ist.

Die Arretierung des Riegels ist durch eine Drehbewegung des Löseelements relativ zu dem Riegel aufhebbar. In einer Ausführungsart ist das Löseelement hierzu an dem Riegel drehbar gelagert angeordnet. Dadurch lässt sich mit einfachen Konstruktionselementen eine sichere Aufhebung der Arretierung des Riegels ermöglichen.

In einer Ausführungsart ist anschließend an die Drehbewegung das Löseelement gemeinsam mit dem Riegel verschiebbar und dadurch auch der verriegelte geschlossene Zustand der Raumtrenneinrichtung aufhebbar, woraufhin die Raumtrenneinrichtung geöffnet werden kann. In einer Ausführungsart ist dabei durch das innerhalb der Raumtrenneinrichtung angeordnete Betätigungselement nur in einer Richtung eine Bewegungskopplung gegeben, nämlich in Richtung der Aufhebung der verriegelnden Position des Riegels, wohingegen in der anderen Richtung ein Freilauf vorgesehen ist, durch den verhindert ist, dass eine innerhalb der Raumtrenneinrichtung befindliche Position den Riegel in seine verriegelnde Position überführen kann.

In einer Ausführungsart ist das Löseelement ein um eine Drehachse drehbarer zweiarmiger Hebel. Durch die Ausgestaltung als zweiarmiger Hebel können unterschiedliche Kraft- und Wegeverhältnisse realisiert werden, beispielsweise kann mit verhältnismäßig kleinen Betätigungskräften ein ausreichend hohes Drehmoment zum Aufheben der Arretierung des Riegels bereitgestellt werden. Umgekehrt kann durch einen entsprechend großen Hebelarm ein verhältnismäßig großer Weg beispielsweise für ein Ausheben des Zuhalteelements aus einer Rastvertiefung und damit für eine Aufhebung der Arretierung des Riegels bereitgestellt werden. Außerdem kann der Abstand zwischen der Einleitung der Kraft zum Aufheben der Arretierung des Riegels einerseits und der Position einer Anlage des Hebels an dem Zuhalteelements andererseits groß gewählt werden. Dadurch lassen sich die zum Betätigen erforderlichen Konstruktionselemente innerhalb der Vorrichtung so anordnen, dass sich eine kleine Bauform ergibt. Alternativ oder ergänzend können die auf der Innenseite und der Außenseite angeordneten Betätigungselemente für das Aufheben der Arretierung des Riegels einerseits und für das Überführen des Riegels in seine verriegelnde Position andererseits vorgesehenen Betätigungselemente mit Abstand zueinander angeordnet werden, was für einige Anwendungsfälle besonders vorteilhaft ist.

Das Löseelement ist mittels eines Drehgriffs betätigbar. Die anfängliche Drehbewegung des Drehgriffs resultiert dabei zunächst in einer Drehbewegung des Löseelements, mit dem die Arretierung des Riegels aufhebbar ist. Beim Weiterdrehen kommt es dann zu einer Linearbewegung des Riegels aus der verriegelten Position.

Das Löseelement ist mittels eines verschiebbar in der Vorrichtung gelagerten Elements drehbar, das über eine Koppeleinrichtung mit dem ersten Drehgriff verbunden ist. Die Koppeleinrichtung wandelt dabei eine Drehbewegung des ersten Drehgriffs um 90° in eine Linearbewegung des Verschiebeelements um. Hierzu weist die Koppeleinrichtung einen ersten und einen zweiten Hebel auf, die an einer Gelenkstelle in der Art eines Kniegelenks gelenkig miteinander verbunden sind. Der erste Hebel ist drehfest mit dem ersten Drehgriff verbunden. Der zweite Hebel ist unmittelbar oder mittelbar über weitere Elemente mit dem Verschiebeelement verbunden. Beim Drehen des ersten Hebels kommt es zu einem Verschieben des Verschiebeelements. Dadurch ist zunächst die Arretierung des Riegels aufhebbar und anschließend der Riegel aus seiner verriegelnden Position herausführbar. In umgekehrter Richtung besteht keine Bewegungskopplung zwischen dem Verschiebeelement und dem Riegel, insbesondere nicht hinsichtlich der Linearbewegung.

In einer Ausführungsart weist die Vorrichtung einen zweiten Drehgriff auf, der von der Außenseite der Raumtrenneinrichtung betätigbar ist, insbesondere auf der Außenseite der Vorrichtung angeordnet ist. Mittels des zweiten Drehgriffs ist der Riegel in seine den geschlossenen Zustand verriegelnde Position bringbar. In einer Ausführungsart weisen die Drehachsen des ersten und zweiten Drehgriffs einen Versatz zueinander auf. Dies hat einerseits den Vorteil, dass jener Teil der Raumtrenneinrichtung, an welcher die Vorrichtung festgelegt wird, nicht mit einer Durchgangsbohrung für die gemeinsame Drehachse der beiden Drehgriffe versehen werden muss, wie dies nach dem Stand der Technik erforderlich ist; eine solche spanende Bearbeitung am Montageort ist aus vielerlei Gründen nachteilig. Andererseits ist durch den Versatz der beiden Drehachsen gewährleistet, dass bei geschlossenem Zustand der Raumtrenneinrichtung keine Lichtspalte existieren, die insbesondere dann nachteilig sind, wenn innerhalb der Raumtrenneinrichtung eine Laserbearbeitungsvorrichtung angeordnet ist und der Austritt von Laserlicht aus der Raumtrenneinrichtung zuverlässig verhindert werden muss.

In einer Ausführungsart sind der Riegel und/oder das Zuhalteelement derart ausgestaltet, dass sie in der den Riegel arretierenden Position in formschlüssigem Eingriff miteinander sind. Beispielsweise kann der Riegel eine Ausnehmung mit einer Rastflanke aufweisen, in welche das Zuhalteelement in der den Riegel arretierenden Position einrastet. Durch den Formschluss ist gewährleistet, dass durch eine sich daraus ergebende Selbsthemmung eine hohe Zuhaltekraft realisiert werden kann, ohne dass entsprechend hohe Antriebskräfte motorisch bereitgestellt werden müssen. Dies ist insbesondere deshalb vorteilhaft, weil durch das Löseelement gegebenenfalls jene Kräfte, welche das Zuhalteelement aktivieren, überwunden werden müssen.

In einer Ausführungsart weist die Vorrichtung einen ersten Sensor auf, mittels dem die den geschlossenen Zustand der Raumtrenneinrichtung verriegelnde Position des Riegels signalisierbar ist. Der erste Sensor kann ein Sicherheitsschalter sein, wie er üblicherweise in der Sicherheitstechnik eingesetzt wird. Neben kontaktbehafteten Sicherheitsschaltern, bei denen ein mechanisch codierter Betätiger in einen Schalterkopf eingeführt wird und dort einen Schaltvorgang auslöst, können auch sogenannte berührungslose oder elektronische Sicherheitsschalter eingesetzt werden, welche Signale zwischen einem Betätiger und einem Lesekopf drahtlos übertragen. In einer Ausführungsform ist ein Betätiger in der Art eines Transponders an dem Riegel angeordnet und kommt in der den geschlossenen Zustand der Raumtrenneinrichtung verriegelnden Position in den Ansprechbereich eines Lesekopfes, sodass nur in der den geschlossenen Zustand der Raumtrenneinrichtung verriegelnden Position des Riegels eine Signalübertragung zwischen Lesekopf und Transponder möglich ist. In einer Ausführungsart ist der Transponder nahe der Mantelfläche des Riegels angeordnet und der Lesekopf nahe oder an der Wand der zugehörigen Riegelaufnahme. Alternativ kann der Betätiger auch an oder nahe dem stirnseitigen Ende des Riegels angeordnet sein.

In einer Ausführungsart weist die Vorrichtung einen zweiten Sensor auf, mittels dem die den Riegel arretierende Position des Zuhalteelements signalisierbar ist. Auch dieser zweite Sensor kann grundsätzlich als berührungsloser Sicherheitsschalter ausgebildet sein. Das Zuhalteelement könnte insbesondere als Koppelelement ausgebildet sein, beispielsweise für eine Signalkopplung zwischen dem an dem Riegel angeordneten Transponder und einem Lesekopf. Grundsätzlich können der erste und der zweite Sensor separat ausgebildet sein. Alternativ ist es möglich, mittels des Zuhalteelements den Transponder des ersten Sensors an einen zweiten Lesekopf des zweiten Sensors zu koppeln, sodass auf dem Riegel nur ein Transponder anzuordnen wäre. Auch in diesem Fall wäre es noch möglich, getrennt zu detektieren, ob der Riegel in seiner arretierenden Position ist und ob die verriegelte Position durch das Zuhalteelement arretiert ist. In einer weiteren Alternative könnte die Signalkopplung zwischen Transponder und Lesekopf des ersten Sensors nur dann möglich sein, wenn das Zuhalteelement in seiner den Riegel arretierenden Position ist.

In einer Ausführungsart ist der zweite Sensor ein optischer oder magnetischer Sensor, beispielsweise eine Lichtschranke oder ein Hallsensor. Derartige Sensoren lassen sich auf einfache Weise in kleiner Bauform und gegebenenfalls auch direkt auf einer Schaltkreisplatine anordnen. Das Zuhalteelement kann als schwenkbarer Hebel ausgebildet sein, mit einer von der Drehachse entfernt angeordneten Rastnase zum Zusammenwirken mit dem Riegel.

Weitere Vorteile, Merkmale und Einzelheiten der Erfindung ergeben sich aus den Unteransprüchen sowie der nachfolgenden Beschreibung, in der unter Bezugnahme auf die Zeichnungen Ausführungsbeispiele der Erfindung im Einzelnen beschrieben sind.
- Fig. 1: zeigt eine schematische Draufsicht auf ein Ausführungsbeispiel einer erfindungsgemäßen Vorrichtung,
- Fig. 2: zeigt einen vergrößerten Ausschnitt des Ausführungsbeispiels,
- Fig. 3: zeigt einen vergrößerten Ausschnitt des Ausführungsbeispiels,
- Fig. 4: zeigt einen vergrößerten Ausschnitt des Ausführungsbeispiels, und
- Fig. 5: zeigt eine Seitenansicht der Vorrichtung.

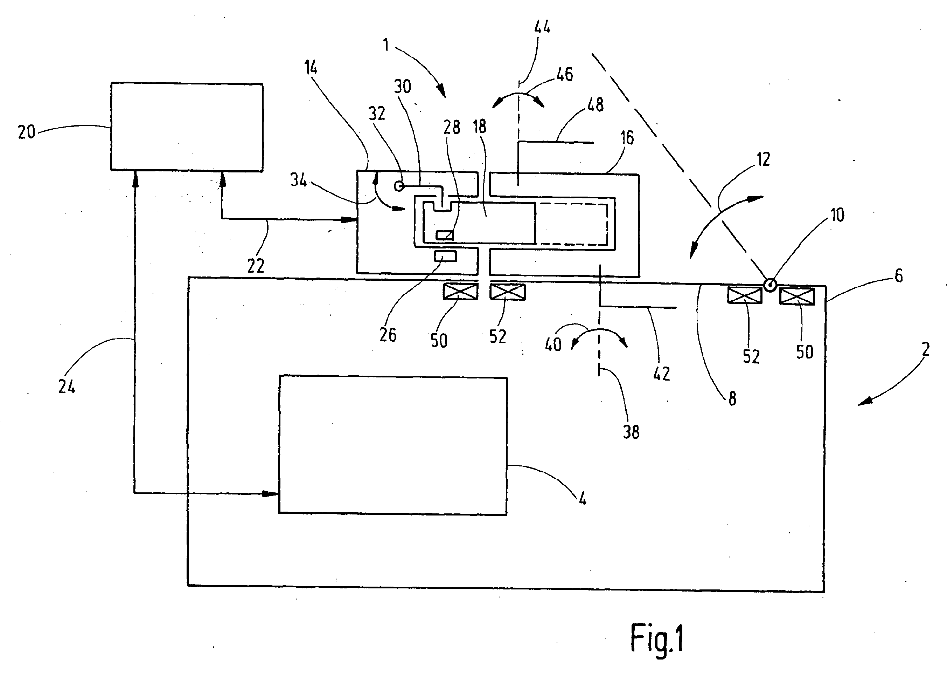

Die Fig.1 zeigt eine schematische Draufsicht auf ein Ausführungsbeispiel einer erfindungsgemäßen Vorrichtung 1 zum lösbaren Zuhalten eines verriegelten geschlossenen Zustandes einer Raumtrenneinrichtung 2, insbesondere einer Schutzeinrichtung einer Maschine 4. Ein erstes, feststehendes Teil 6 weist eine Öffnung auf, die durch ein zweites Teil 8 verschließbar ist. Das erste und zweite Teil 6, 8 sind relativ zueinander bewegbar und dadurch ist die Öffnung mindestens teilweise verschließbar. In dem dargestellten Ausführungsbeispiel ist das zweite Teil 8 eine um die erste Achse 10 entsprechend dem ersten Pfeil 12 drehbare Tür. Gestrichelt ist der offene Zustand der Tür eingezeichnet. Durch die Öffnung kann eine Person in das Innere der Raumtrenneinrichtung 2 eintreten und die Maschine 4 beispielsweise bestücken, warten oder reparieren. Während des Betriebs der Maschine 4 soll oder darf sich keine Person innerhalb der Raumtrenneinrichtung 2 aufhalten.

Zu diesem Zweck weist die Vorrichtung 1 eine an dem ersten Teil 6 angeordnete erste Komponente 14 auf und eine an dem zweiten Teil 8 angeordnete zweite Komponente 16. Die erste Komponente 14 weist eine Aufnahme für einen in der zweiten Komponente 16 verschiebbar gelagerten Riegel 18 auf, mittels dem der in durchgezogenen Linien dargestellte geschlossene Zustand der Raumtrenneinrichtung 2 verriegelbar ist, sodass sich in diesem Zustand die Raumtrenneinrichtung 2 nicht öffnen lässt.

Der verriegelte Zustand ist mittels eines Sicherheitsschalters über eine erste Verbindungsleitung 22 an einer Steuereinrichtung 20 signalisierbar, die entsprechend dem hinterlegten Steuerprogramm über eine zweite Verbindungsleitung 24 die Maschine 4 steuert. Umgekehrt gibt die Maschine 4 über die zweite Verbindungsleitung 24 an die Steuereinrichtung 20 eine Rückmeldung über den Betriebszustand und die Steuereinrichtung 20 kann die Vorrichtung 1 beispielsweise hinsichtlich der Zuhaltung des verriegelten Zustandes steuern. Der Sicherheitsschalter weist im Ausführungsbeispiel einen an der ersten Komponente 14 angeordneten Lesekopf 26 und einen an dem Riegel 18 angeordneten Betätiger 28 auf, wobei nur im dargestellten verriegelten Zustand ein Signalaustausch zwischen Lesekopf 26 und Betätiger 28 möglich ist.

Die Vorrichtung 1 weist außerdem ein Zuhalteelement 30 auf, das im Ausführungsbeispiel in der ersten Komponente 14 angeordnet ist und um eine zweite Achse 32 gemäß dem zweiten Pfeil 34 schwenkbar ist. Durch das Zuhalteelement 30 ist der Riegel 18 in seiner dargestellten verriegelnden Position arretierbar. Das Zuhalteelement 30 und der Riegel 18 sind dabei in formschlüssigem Eingriff. Im Ausführungsbeispiel greift das Zuhalteelement 30 hierzu in eine Ausnehmung im Riegel 18 ein, wobei die Ausnehmung eine Rastflanke aufweist, durch die sich gegenüber einer Rückstellbewegung des Riegels 18 eine Selbsthemmung ergibt.

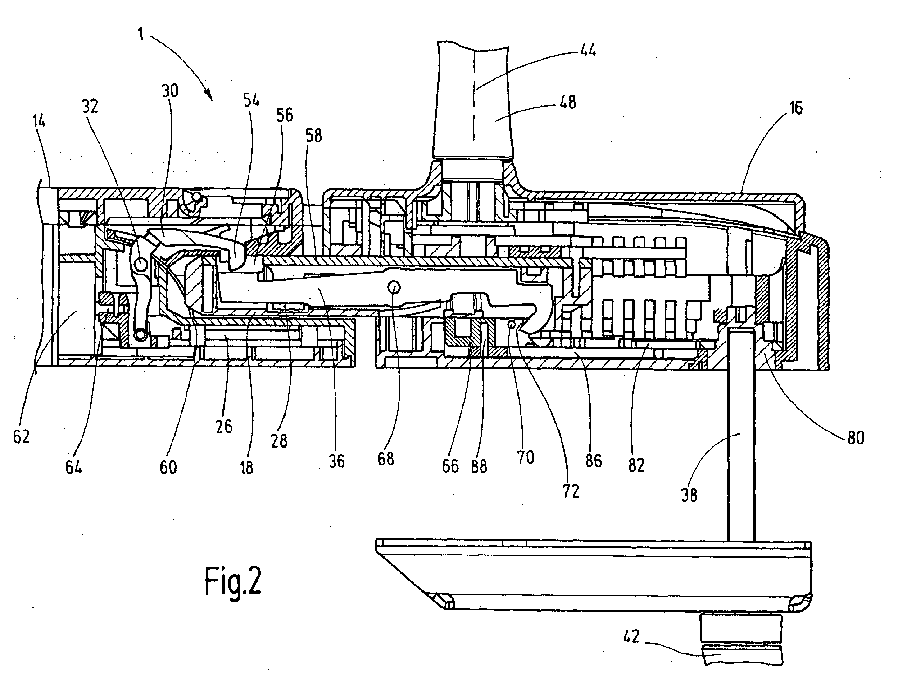

Mittels eines Löseelements 36 (Fig. 2) ist die Arretierung des Riegels 18 aufhebbar, insbesondere das Zuhalteelement 30 aus seiner in der Fig. 1 dargestellten Position aushebbar. Das Lösen der Arretierung erfolgt dabei durch ein vom Inneren der Raumtrenneinrichtung 2 betätigbares erste Betätigungselement, das im Ausführungsbeispiel durch einen um eine dritte Achse 38 gemäß dem dritten Pfeil 40 drehbaren ersten Drehgriff 42 gebildet ist. Anschließend an das Aufheben der Arretierung des Riegels 18 wird dieser beim weiteren Drehen des ersten Drehgriffs in die zweite Komponente 16 zurückgezogen, sodass auch die Verriegelung des geschlossenen Zustandes aufgehoben ist und das zweite Teil 8 geöffnet werden kann.

In einer Ausführungsart ist das Zuhalteelement 30 manuell nur auf diese Weise außer Eingriff mit dem Riegel 18 zu bringen, insbesondere nicht durch das von der Außenseite der Raumtrenneinrichtung 2 zugängliche zweite Betätigungselement, das im Ausführungsbeispiel durch einen um die vierte Achse 44 gemäß dem vierten Pfeil 46 drehbaren zweiten Drehgriff 48 gebildet ist. Mit dem zweiten Drehgriff 48 kann das zweite Teil 8 geschlossen werden und durch Drehen des zweiten Drehgriffs 48 der Riegel 18 in die dargestellte verriegelnde Position ausgefahren werden.

Die Raumtrenneinrichtung 2 ist im Ausführungsbeispiel eine Schutzkabine oder ein Schutzgitter, bei dem die flächigen Elemente an senkrecht zur Zeichenebene der Fig. 1 verlaufenden Profilholmen 50 befestigt sind, an denen auch die Komponenten 14, 16 der Vorrichtung 1 festgelegt werden können. Wie sich aus der schematischen Darstellung der Fig. 1 ergibt, weisen die parallel zueinander verlaufende dritte Achse 38 des ersten Drehgriffs 42 und die vierte Achse 44 des zweiten Drehgriffs 48 einen Versatz zueinander auf, sodass es nicht erforderlich ist, für einen Durchtritt der vierten Achse 44 in das Innere der Raumtrenneinrichtung 2 hinein den Profilholmen 52 zu durchbohren.

Die Fig. 2 zeigt einen gegenüber der Darstellung in der Fig. 1 vergrößerten Ausschnitt des Ausführungsbeispiels der Vorrichtung 1. Die erste Komponente 14 ist mittels nicht dargestellter Verbindungsmittel mit dem ersten Profilholmen 50 und damit mit dem ersten Teil 6 (Fig. 1) verbunden. Innerhalb der ersten Komponente 14 ist das Zuhalteelement 30 um die senkrecht zur Zeichenebene verlaufende zweite Achse 32 drehbar gelagert und im dargestellten zugehaltenen verriegelten Zustand mit seiner endseitig ausgebildeten Nase 54 in Eingriff in einer Ausnehmung 56 des Riegels 18.

Der im Wesentlichen zylindrische Riegel 18, der im Querschnitt kreisförmig oder im Wesentlichen rechteckig geformt sein kann, besteht im Ausführungsbeispiel aus einem Grundteil aus Kunststoff, mit einem Einlageteil 58 aus Metall, insbesondere einem im Querschnitt U-förmig gebogenen Blech. Das Einlageteil 58 bildet die Ausnehmung 56 und dient insbesondere der Aufnahme der Arretierungskräfte. In einem in dem dargestellten verriegelten und arretierten Zustand in die Riegelaufnahme 60 eingeführten Teil ist nahe der Mantelfläche an dem Riegel 18 der als Transponder ausgebildete Betätiger 28 angeordnet, der von dem Lesekopf 26 nur in der dargestellten Position auslesbar ist, sodass der verriegelte geschlossene Zustand der Raumtrenneinrichtung 2 signalisierbar ist.

Die Nase 54 des Zuhalteelements 30 sowie die Ausnehmung 56 im Einlegeteit 58 bilden jeweils eine Fläche aus, die zueinander im Wesentlichen parallel sind und mit der Bewegungsrichtung des Riegels 18 zum Entriegeln einen rechten Winkel einschließen. Dadurch ergibt sich beim Versuch, durch Drehen des zweiten Drehgriffs 48 um die vierte Achse 44 den Riegel 18 zurückzuziehen, ein Formschluss zwischen Riegel 18 und Zuhalteelement 30, durch den sehr hohe Zuhaltekräfte aufbringbar sind. Durch die Steuereinrichtung 20 oder beispielsweise durch einen manuellen NOT-AUS kann das Zuhalteelement 30 aus seiner zuhaltenden Position herausgeführt werden, beispielsweise indem ein in der ersten Komponente 14 angeordneter Elektromagnet 62 bestromt wird und dadurch der Magnetanker 64 an einem der Nase 54 in Bezug auf die zweite Achse 32 gegenüberliegenden Arm in Anlage kommt und das Zuhalteelement 30 in der Darstellung der Fig. 2 gegen den Uhrzeigersinn dreht.

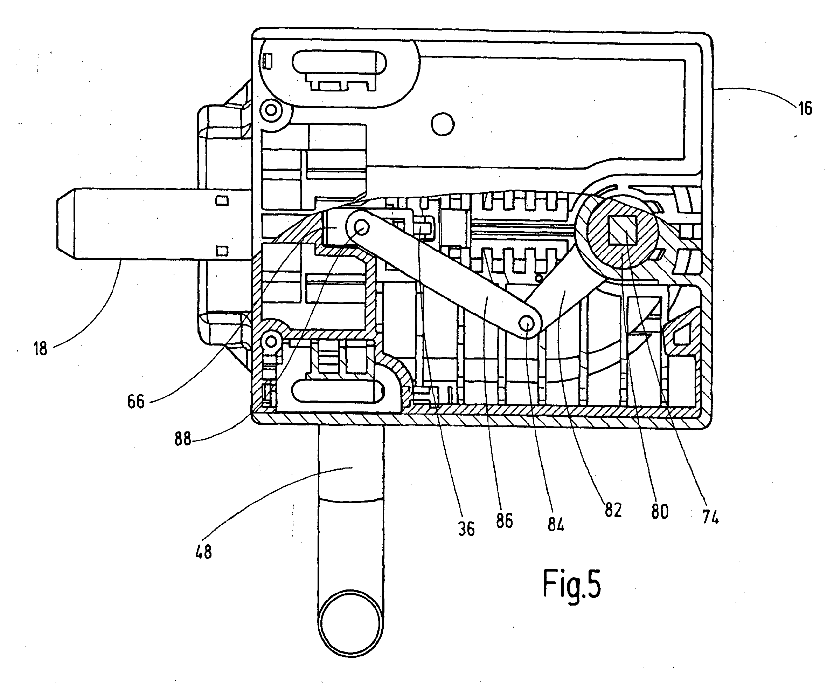

Unabhängig von einer solchen gesteuerten Aufhebung der Zuhaltung besteht darüber hinaus die Möglichkeit, durch Drehen an dem ersten Drehgriff 42 um die dritte Achse 38 ein Verschiebeelement 66 innerhalb der zweiten Komponente 16 derart zu verschieben, dass ein Löseelement 36 um eine senkrecht zur Zeichenebene verlaufende fünfte Achse 68 in der Darstellung der Fig. 2 im Uhrzeigersinn gedreht wird und dadurch mit seinem dem Zuhalteelement 30 zugeordneten Abschnitt in Anlage an das Zuhalteelement 30 kommt und dieses im Verlauf der Drehbewegung aus der Ausnehmung 56 aushebt und dadurch die Zuhaltung aufhebt. Die Umsetzung der Drehbewegung des ersten Drehgriffs 42 in die Linearbewegung des Verschiebeelements 66 erfolgt über eine erste und zweite Hebel 82, 86 aufweisende Koppeleinrichtung, die in der Fig. 5 in einer Seitenansicht dargestellt ist. Die Bewegungskopplung zwischen dem zweiten Drehgriff 48 und dem Riegel 18 kann in ähnlicher Weise erfolgen.

Beim Drehen des ersten Drehgriffs 42 wird das Verschiebeelement 66 und ein darauf angeordneter Stift 70 in der Darstellung der Fig. 2 nach rechts bewegt. Dadurch kommt der Stift 70 in Anlage an eine Schrägfläche 72, und die Linearbewegung des Stifts 70 wird durch das Zusammenwirken des Stifts 70 mit der Schrägfläche 72 in die Drehbewegung des Löseelements 36 umgewandelt. Das Löseelement 36 ist als in Bezug auf die fünfte Achse 68 zweiarmiger Hebel ausgebildet, wobei die Angriffsfläche des Verschiebeelements 66 auf einer der Anlagefläche für das Zuhalteelement 54 in Bezug auf die fünfte Achse 68 gegenüberliegenden Seite liegt. Der Achszapfen zur Lagerung des Löseelements 36 wird dabei von dem Riegel 18 ausgebildet oder ist an diesem festgelegt.

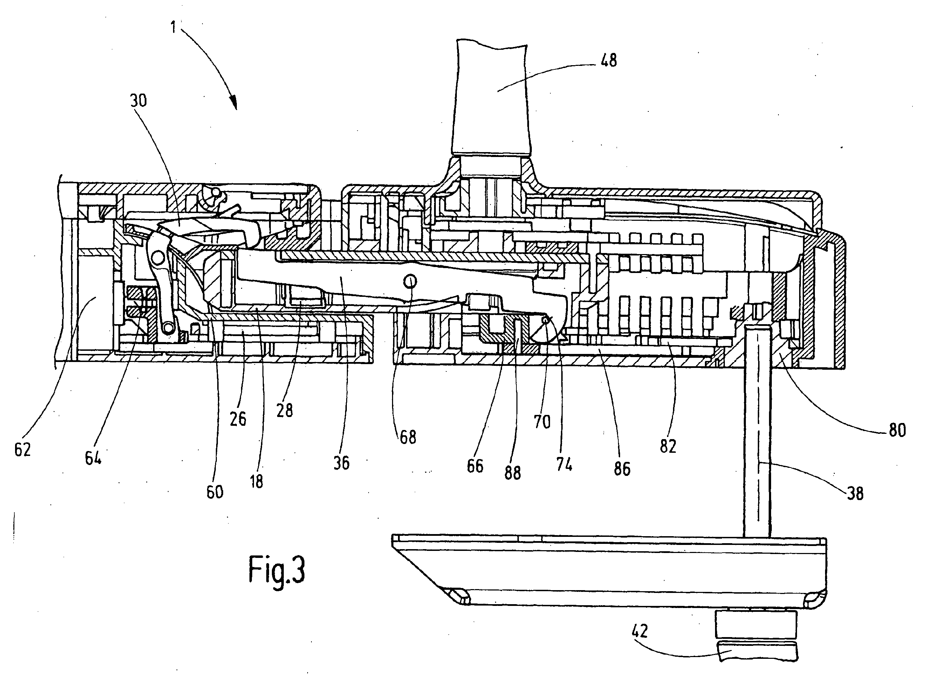

Die Fig. 3 zeigt einen der Fig. 2 entsprechenden Ausschnitt des Ausführungsbeispiels der Vorrichtung 1, allerdings in einem Zustand, in dem der erste Drehgriff 42 so weit um die dritte Achse 38 gedreht ist, dass der Stift 70 vollständig entlang der Schrägfläche 72 entlangbewegt ist und in einer teilkreisförmigen Aufnahme 74 des Löseelements 36 aufgenommen ist. In diesem Zustand ist das Löseelement 36 maximal um die fünfte Achse 68 gedreht und dadurch das Zuhalteelement 30 vollständig aus der Ausnehmung 56 ausgehoben, sodass die Zuhaltung aufgehoben ist. Bei einem weiteren Drehen des ersten Drehgriffs 42 und damit einem weiteren Verschieben des Verschiebeelements 66 nimmt der Stift 70 das Löseelement 36 und über die Lagerung an der fünften Achse 68 auch den Riegel 18 mit und bewegt diesen in der Darstellung der Fig. 3 nach rechts, sodass der Riegel 18 vollständig aus der Riegelaufnahme 60 austritt und dementsprechend auch die Verriegelung aufgehoben ist.

Sofern das Zuhalteelement 30 beispielsweise mittels einer Lichtschranke oder eines Hallsensors in seiner Position überwacht wird, kann der in der Fig. 3 dargestellte Zustand dahingehend signalisiert werden, dass eine Zuhaltung nicht mehr gegeben ist. Gleichzeitig kann über den Betätiger 28 und den Lesekopf 26 auch noch signalisiert werden, dass die Raumtrenneinrichtung 2 sich nach wie vor in einem geschlossenen verriegelten Zustand befindet.

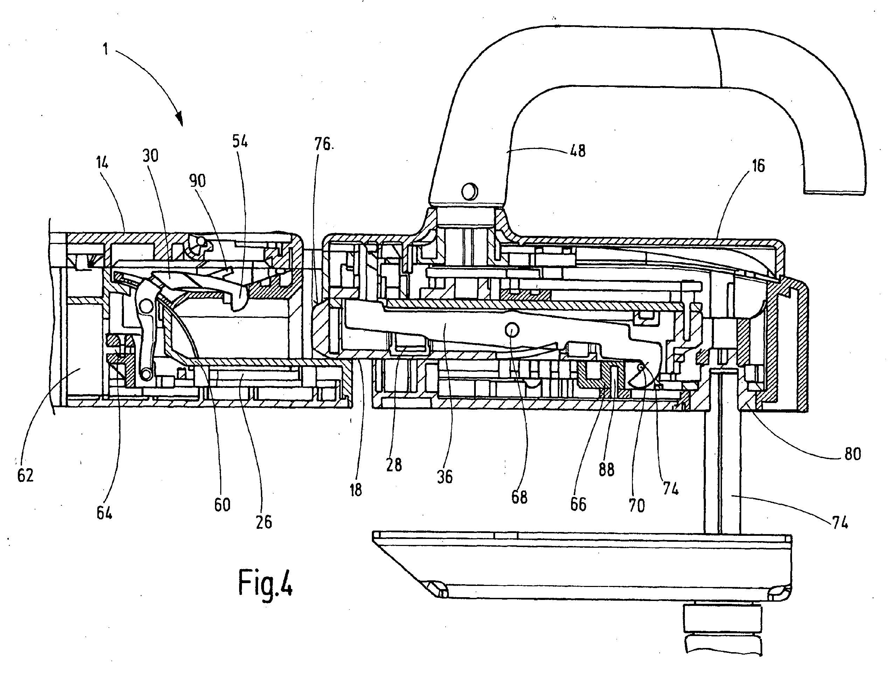

Die Fig. 4 zeigt eine den Figuren 2 und 3 vergleichbare vergrößerte Darstellung in dem Zustand der Vorrichtung 1, in dem der Riegel 18 durch vollständiges Drehen des ersten Drehgriffs 42 fast vollständig in die zweite Komponente 16 zurückgezogen ist. Das Verschiebeelement 66 befindet sich ebenso wie der Riegel 18 an seinem hinteren Anschlag. Ein Weiterdrehen des ersten Drehgriffs 42 in der Drehrichtung, die zu einer Aufhebung der Arretierung geführt hat, ist nicht mehr möglich.

Aufgrund einer bestehenden Bewegungskopplung befindet sich auf der Außenseite der Raumtrenneinrichtung 2 der zweite Drehgriff 48 nun in seiner gegenüber der Fig. 2 gegenüberliegenden Endposition und wurde insbesondere durch das Drehen des ersten Drehgriffs 42 zurückgedreht. In dem dargestellten Zustand kann das zweite Teil 8 (Fig. 1) gegenüber dem ersten Teil 6 geöffnet werden. Der Betätiger 28 befindet sich nicht mehr im Lesebereich des Lesekopfes 26, sodass der nicht verriegelte Zustand signalisierbar ist. Soweit es erforderlich oder vorteilhaft ist, dass der geschlossene Zustand des zweiten Teils 8 nach wie vor signalisierbar sein soll, kann ein zusätzlicher Sicherheitsschalter beispielsweise auf den einander zugewandten Stirnseiten des ersten und zweiten Teils 6, 8 angeordnet sein, der unabhängig von der verriegelnden Position des Riegels 18 die geschlossene Position des zweiten Teils 8 signalisiert.

Für ein erneutes Verriegeln aus der in der Fig. 4 dargestellten Position muss der Riegel 18 wieder in die Riegelaufnahme 60 eingeführt werden. Dies ist durch ein Drehen des ersten Drehgriffs 42 nicht möglich, weil dadurch zwar das Verschiebeelement 66 in der Darstellung der Fig. 4 nach links bewegt wird, aber diesbezüglich keine Bewegungskopplung mit dem Riegel 18 besteht. Dadurch ist zuverlässig verhindert, dass eine auf der Innenseite der Raumtrenneinrichtung 2 befindliche Person den Riegel 18 in seine den geschlossenen Zustand verriegelnde Position bringen kann. Vielmehr muss zu diesem Zweck der zweite Drehgriff 48 gedreht werden und der Riegel 18 aus der zweiten Komponente 16 herausbewegt werden.

An oder nahe seinem stirnseitigen Ende weist der Riegel eine Fase 76 auf. Mit dieser kann der Riegel 18 das Zuhalteelement 30 aus seiner in der Fig. 4 dargestellten Position herausheben, in der das Zuhalteelement 30 mit seiner Nase 54 über die Ausnehmung 56 in die Riegelaufnahme 60 hineinragt. Beim vollständigen Einführen des Riegels 18 in die Riegelaufnahme 60 rastet die Nase 54 wiederum in die Ausnehmung 56 ein und arretiert den Riegel 18 in seiner verriegelnden Position. Bei dieser Bewegung des Riegels 18 kommt es aufgrund der Bewegungskopplung zwischen dem Löseelement 36 und dem Verschiebeelement 66, insbesondere aufgrund der Anlage der teilkreisförmigen Aufnahme 74 an dem Stift 70, auch zu einer Rückstellbewegung des ersten Drehgriffs 42, bis dieser wieder die in der Fig. 2 dargestellte Ausgangsposition einnimmt.

Vorzugsweise einstückig bildet das Zuhalteelement 30 eine von außerhalb der Vorrichtung 1 jedenfalls nach Abnehmen einer Abdeckung zugänglich Angriffsfläche 90 aus, mittels welcher die Zuhaltung manuell, vorzugsweise mit einem geeigneten Werkzeug, aufhebbar ist.

Die Fig. 5 zeigt eine um 90° gegenüber den Darstellungen der Figuren 2 bis 4 versetzte Seitenansicht der Vorrichtung 1, insbesondere der zweiten Komponente 16 aus der Richtung der Position des ersten Drehgriffs 42. Dargestellt ist eine Koppeleinrichtung, mittels welcher die Drehbewegung des ersten Drehgriffs 42 in eine Linearbewegung des Verschiebeelements 66 umgesetzt wird. Die Darstellung der Fig. 5 entspricht dabei der Position des Riegels 18 in der Fig. 2. Ein von dem ersten Drehgriff 42 drehbare Vierkant 78 ist durch seine Form drehfest mit einer Mitnehmerwelle 80 verbunden, die wiederum drehfest mit einem ersten Hebel 82 verbunden ist. An einer beispielsweise durch einen Stift gebildeten Gelenkstelle 84 ist der erste Hebel 82 mit einem zweiten Hebel 86 verbunden, der wiederum an einer von der Gelenkstelle 84 beabstandeten Position mit dem Verschiebeelement 66 verbunden ist, insbesondere gelenkig an einer weiteren Gelenkstelle 88 an dem Verschiebeelement 66 angelenkt ist. Dadurch wird bei einem Drehen des ersten Drehgriffs 42 um die dritte Achse 38, die senkrecht zur Zeichenebene der Fig. 5 verläuft, das Verschiebeelement 66 hin und herbewegt, wobei nur in einer Richtung eine Bewegungskopplung mit dem Löseelement 36 gegeben ist.

## Patentansprüche

1. Vorrichtung (1) zum lösbaren Zuhalten eines verriegelten geschlossenen Zustandes einer Raumtrenneinrichtung (2), insbesondere einer Schutzeinrichtung einer Maschine (4), die ein erstes Teil (6) mit einer Öffnung und ein zweites Teil (8) aufweist, die relativ zueinander bewegbar sind und dadurch die Öffnung mindestens teilweise schließbar ist, wobei die Vorrichtung (1) aufweist
• einen Riegel (18), mittels dem der geschlossene Zustand der Raumtrenneinrichtung (2) verriegelbar ist,
• ein Zuhalteelement (30), mittels dem der Riegel (18) in seiner verriegelnden Position arretierbar ist,
• und ein Löseelement (36), mittels dem das Zuhalteelement (30) und damit die Arretierung des Riegels (18) aufhebbar ist,
wobei die Arretierung des Riegels (18) durch eine Drehbewegung des Löseelements (36) relativ zu dem Riegel (18) aufhebbar ist, das Löseelement (36) mittels eines verschiebbar in der Vorrichtung (1) gelagerten Verschiebeelements (66) drehbar ist, und das Löseelement (36) mittels eines ersten Drehgriffs (42) betätigbar ist, der über eine Koppeleinrichtung mit dem Verschiebeelement (66) verbunden ist,
wobei die Koppeleinrichtung einen ersten Hebel (82) und einen zweiten Hebel (86) aufweist, die an einer Gelenkstelle (84) gelenkig miteinander verbunden sind, und wobei der erste Hebel (82) drehfest mit dem ersten Drehgriff (42) verbunden ist und der zweite Hebel (86) an einer von der Gelenkstelle (84) beabstandeten Position mit dem Verschiebeelement (66) verbunden ist.

2. Vorrichtung (1) nach Anspruch 1, **dadurch gekennzeichnet, dass** das Löseelement (36) ein um eine Achse (68) drehbarer zweiarmiger Hebel ist.

3. Vorrichtung (1) nach Anspruch 2, **dadurch gekennzeichnet, dass** ein erster Arm des Hebels beim Drehen die Arretierung des Riegels (18) aufhebt und die Kraft zum Drehen des Löseelements (36) an einem zweiten Arm einleitbar ist.

4. Vorrichtung (1) nach einem der vorangegangenen Ansprüche, **dadurch gekennzeichnet, dass** eine Bewegungskopplung zwischen dem Verschiebeelement (66) und dem Löseelement (36) nur in einer die Arretierung des Riegels (18) aufhebenden Bewegungsrichtung des Verschiebeelements (66) gegeben ist.

5. Vorrichtung nach einem der vorangegangenen Ansprüche, **dadurch gekennzeichnet, dass** die Koppeleinrichtung eine Drehbewegung des ersten Drehgriffs (42) in eine Linearbewegung des Verschiebeelements (66) umwandelt.

6. Vorrichtung (1) nach einem der vorangegangenen Ansprüche, **dadurch gekennzeichnet, dass** die Vorrichtung (1) einen zweiten Drehgriff (48) aufweist, mittels dem der Riegel (18) in die verriegelte Position bringbar ist, und dass die Drehachsen (38, 44) des ersten und zweiten Drehgriffs (42, 48) einen Versatz zueinander aufweisen.

7. Vorrichtung (1) nach einem der vorangegangenen Ansprüche, **dadurch gekennzeichnet, dass** anschließend an die Drehbewegung, mittels der die Arretierung des Riegels (18) aufhebbar ist, das Löseelement (36) gemeinsam mit dem Riegel (18) verschiebbar ist und dadurch die verriegelnde Position des Riegels (18) aufhebbar ist.

8. Vorrichtung (1) nach einem der vorangegangenen Ansprüche, **dadurch gekennzeichnet, dass** der Riegel (18) und das Zuhalteelement (30) in der den Riegel (18) arretierenden Position in formschlüssigem Eingriff miteinander sind.

9. Vorrichtung (1) nach Anspruch 8, **dadurch gekennzeichnet, dass** der Riegel (18) eine Ausnehmung (56) mit einer Rastflanke aufweist, in welche das Zuhalteelement (30) in der den Riegel (18) arretierenden Position einrastet.

10. Vorrichtung (1) nach einem der vorangegangenen Ansprüche, **dadurch gekennzeichnet, dass** die Vorrichtung (1) einen ersten Sensor aufweist, mittels dem die den geschlossenen Zustand der Raumtrenneinrichtung (2) verriegelnde Position des Riegels (18) signalisierbar ist.

11. Vorrichtung (1) nach Anspruch 10, **dadurch gekennzeichnet, dass** der erste Sensor ein drahtlos Signale übertragender Sicherheitsschalter ist.

12. Vorrichtung (1) nach Anspruch 10 oder 11, **dadurch gekennzeichnet, dass** der erste Sensor einen Lesekopf (26) und einen mit dem Lesekopf (26) zusammenwirkenden Betätiger (28) aufweist, vorzugsweise einen an dem Riegel (18) angeordneten Transponder, und dass nur in der den geschlossenen Zustand der Raumtrenneinrichtung (2) verriegelnden Position des Riegels (18) eine Signalübertragung zwischen Lesekopf (26) und Betätiger (28) möglich ist.

13. Vorrichtung (1) nach einem der vorangegangenen Ansprüche, **dadurch gekennzeichnet, dass** die Vorrichtung (1) einen zweiten Sensor aufweist, mittels dem die den Riegel (18) arretierende Position des Zuhalteelements (30) signalisierbar ist.

## Claims

1. An apparatus (1) for maintaining a locked and closed state of a space-separating device (2) in a releaseable manner, in particular a protective device of a machine (4), having a first part (6) with an opening and a second part (8), which parts can be moved relative to one another, and in this way the opening can be at least partially closed, the apparatus (1) having
. a latch (18) by means of which the closed state of the space-separating device (2) can be locked,
. a holding element (30) by means of which the latch (18) can be blocked in its locking position,
. and a release element (36) by means of which the holding element (30) and so the blocking of the latch (18) can be neutralised,
wherein the blocking of the latch (18) can be neutralised by a rotary motion of the release element (36) relative to the latch (18), the release element (36) can be turned by means of a displacement element (66) which is moveably supported in the apparatus (1), and the release element (36) can be actuated by means of a first knob (42) which is connected to the displacement element (66) by means of a coupling device, the coupling device having a first lever (82) and a second lever (86) which are hinged to one another at an articulation point (84), and the first lever (82) being non-rotatably connected to the first knob (42) and the second lever (86) being connected to the displacement element (66) at a position at a distance from the articulation point (84).

2. The apparatus (1) according to Claim 1, **characterised in that** the release element (36) is a dual-arm lever which can be turned around an axis (68).

3. The apparatus (1) according to Claim 2, **characterised in that** a first arm of the lever neutralises the blocking of the latch (18) during rotation and the force for turning the release element (36) can be delivered on a second arm.

4. The apparatus (1) according to any of the preceding claims, **characterised in that** there is motion coupling between the displacement element (66) and the release element (36) only in one direction of motion of the displacement element (66) which neutralises the blocking of the latch (18).

5. The apparatus according to any of the preceding claims, **characterised in that** the coupling device converts rotary motion of the first knob (42) into linear motion of the displacement element (66).

6. The apparatus (1) according to any of the preceding claims, **characterised in that** the apparatus (1) has a second knob (48) by means of which the latch (18) can be moved into the locked position, and that the axes of rotation (38, 44) of the first and second knob (42, 48) have an offset to one another.

7. The apparatus (1) according to any of the preceding claims, **characterised in that** following the rotary motion by means of which the blocking of the latch (18) can be neutralised, the release element (36) together with the latch (18) can be moved and thus the locking position of the latch (18) can be neutralised.

8. The apparatus (1) according to any of the preceding claims, **characterised in that** the latch (18) and the holding element (30) positively engage with one another in the position which blocks the latch (18).

9. The apparatus (1) according to Claim 8, **characterised in that** the latch (18) has a recess (56) with a catch flank in which the holding element (30) catches in the position which blocks the latch (18).

10. The apparatus (1) according to any of the preceding claims, **characterised in that** the apparatus (1) has a first sensor by means of which the position of the latch (18) which locks the closed state of the space-separating device (2) can be signalled.

11. The apparatus (1) according to Claim 10, **characterised in that** the first sensor is a safety switch which wirelessly transmits signals.

12. The apparatus (1) according to Claim 10 or 11, **characterised in that** the first sensor has a read head (26) and an actuator (28) which interacts with the read head (26), preferably a transponder which is located on the latch (18) and that only in the position of the latch (18) which locks the closed state of the space-separating device (2) is signal transmission between the read head (26) and the actuator (28) possible.

13. The apparatus (1) according to any of the preceding claims, **characterised in that** the apparatus (1) has a second sensor by means of which the position of the holding element (30) which blocks the latch (18) can be signalled.

## Revendications

1. Dispositif (1) de maintien libérable d'un état fermé, de manière verrouillée, d'un dispositif (1) de séparation de compartiment, notamment d'un dispositif de protection d'une machine (4), qui a une première partie (6) ayant une ouverture et une deuxième partie (8) qui sont mobiles l'une par rapport à l'autre et ainsi l'ouverture peut être fermée au moins en partie, dans lequel le dispositif (1) comporte
• un verrou (18), au moyen duquel l'état fermé du dispositif (2) de séparation de compartiment peut être verrouillé,
• un élément (30) de maintien, au moyen duquel le verrou (18) peut être bloqué dans sa position de verrouillage,
• et un élément (36) de libération, au moyen duquel l'élément (30) de maintien et ainsi le blocage du verrou (18) peut être levé,
dans lequel le blocage du verrou (18) peut être levé par un mouvement de rotation de l'élément (36) de libération par rapport au verrou (18), l'élément (36) de libération peut être tourné au moyen d'un élément (66) de coulissement monté coulissant dans le dispositif (1) et l'élément (36) de libération peut être actionné au moyen d'une première poignée (42) tournante, qui est reliée par un dispositif d'accouplement à l'élément (66) de coulissement, le dispositif d'accouplement ayant un premier levier (82) et un deuxième levier (86) qui sont articulés entre eux en un point (84) d'articulation et dans lequel le premier levier (82) est solidaire en rotation de la première poignée (42) tournante et le deuxième levier (86) est relié à l'élément (66) de coulissement en une position à distance du point (84) d'articulation.

2. Dispositif (1) suivant la revendication 1, **caractérisé en ce que** l'élément (36) de libération est un levier à deux bras tournant autour d'un axe (68).

3. Dispositif (1) suivant la revendication 2, **caractérisé en ce qu'**un premier bras du levier fait cesser, lors de la rotation, le blocage du verrou (18) et la force de rotation de l'élément (36) de libération peut être appliquée à un deuxième bras.

4. Dispositif (1) suivant l'une des revendications précédentes, **caractérisé en ce qu'**un couplage du mouvement entre l'élément (66) de coulissement et l'élément (36) de libération n'est donné que dans une direction de déplacement de l'élément (66) de coulissement faisant cesser le blocage du verrou (18).

5. Dispositif (1) suivant l'une des revendications précédentes, **caractérisé en ce que** le dispositif d'accouplement transforme un mouvement de rotation de la première poignée (42) tournante en un mouvement linéaire de l'élément (66) de coulissement.

6. Dispositif (1) suivant l'une des revendications précédentes, **caractérisé en ce que** le dispositif (1) a une deuxième poignée (48) tournante, au moyen de laquelle le verrou (18) peut être mis dans la position verrouillée et **en ce que** les axes (38, 44) de rotation de la première et de la deuxième poignées (42, 48) tournantes ont un décalage l'un par rapport à l'autre.

7. Dispositif (1) suivant l'une des revendications précédentes, **caractérisé en ce qu'**à la suite du mouvement de rotation au moyen duquel on peut faire cesser le blocage du verrou (18), l'élément (36) de libération peut être déplacé conjointement avec le verrou (18) et ainsi il peut être mis fin à la position de verrouillage du verrou (18).

8. Dispositif (1) suivant l'une des revendications précédentes, **caractérisé en ce que** le verrou (18) et l'élément (30) de maintien sont en prise à complémentarité de forme dans la position bloquant le verrou (18).

9. Dispositif (1) suivant la revendication 8, **caractérisé en ce que** le verrou (18) a un évidement (56) ayant un flanc d'encliquetage dans lequel l'élément (30) de maintien s'encliquette dans la position bloquant le verrou (18).

10. Dispositif (1) suivant l'une des revendications précédentes, **caractérisé en ce que** le dispositif (1) à un premier capteur, au moyen duquel la position du verrou (18) verrouillant l'état fermé du dispositif (2) de séparation d'un compartiment peut être signalé.

11. Dispositif (1) suivant la revendication 10, **caractérisé en ce que** le premier capteur est un commutateur de sécurité transmettant des signaux sans fil.

12. Dispositif (1) suivant la revendication 10 ou 11, **caractérisé en ce que** le premier capteur a une tête (26) de lecture et un actionneur (28) coopérant avec la tête (26) de lecture, de préférence un transpondeur, monté sur le verrou (18) et **en ce qu'**une transmission du signal entre la tête (26) de lecture et l'actionneur (28) n'est possible que dans la position du verrou (18) verrouillant l'état fermé du dispositif (2) de séparation de compartiment.

13. Dispositif (1) suivant l'une des revendications précédentes, **caractérisé en ce que** le dispositif (1) à un deuxième capteur, au moyen duquel la position de l'élément (30) de maintien verrouillant le verrou (18) peut être signalé.
